# EUROPEAN PATENT APPLICATION

(11) **EP 2 657 200 A1**
(43) Date of publication of application: **30.10.2013**
(21) Application number: 11841844.1
(22) Date of filing: 04.11.2011
(51) Int. Cl.: C03C 10/12, C03B 32/02

(54) **Li2O-A12O3-SiO2 CHRYSTALLIZABLE GLASS AND Li2O-A12O3-SiO2 CRYSTALLISED GLASS OBTAINED BY CHRYTALLIZING SAME**

(30) Priority: 18.11.2010 JP 2010257490
(71) Applicant: Nippon Electric Glass Co., Ltd., Otsu-shi Shiga 520-8639 (JP)
(72) Inventor: NAKANE Shingo, Otsu-shi Shiga 520-8639 (JP); KAWAMOTO Kosuke, Otsu-shi Shiga 520-8639 (JP)
(74) Representative: Tetzner, Michael
(86) International application number: PCT/JP2011/075502
(87) International publication number: WO 2012/066948

(57) **Abstract**

Provided is a Li₂O-Al₂O₃-SiO₂-based crystallizable glass characterized by comprising, as a glass composition in terms of mass%, 55 to 75% of SiO₂, 19 to 24% of Al₂O₃, 3 to 4% of Li₂O, 1.5 to 2.8% of TiO₂, 3.8 to 4.8% of TiO₂+ZrO₂, and 0.1 to 0.5% of SnO₂, and satisfying a relationship of 4≤Li₂O+0.741MgO+0.367ZnO≤4.5.

## Description

### Technical Field

The present invention relates to a Li₂O-Al₂O₃-SiO₂-based crystallizable glass and to a Li₂O-Al₂O₃-SiO₂-based crystallized glass obtained by crystallizing the same and suitable for heat resistant applications such as a front window or fireproof window of a kerosene stove, a wood stove, and the like.

### Background Art

A Li₂O-Al₂O₃-SiO₂-based crystallized glass has been conventionally used as a material for: a front window of a kerosene stove, a wood stove, or the like; a substrate for a high-tech product such as a substrate for a color filter or an image sensor; a setter for firing an electronic part; a tray for a microwave oven; a top plate for induction heating cooking; a window glass for a fire protection door; or the like. For example, Patent Literatures 1 to 3 each discloses a Li₂O-Al₂O₃-SiO₂-based crystallized glass comprising a Li₂O-Al₂O₃-SiO₂-based crystal, such as a β-quartz solid solution (Li₂O·Al₂O₃·nSiO₂ (provided that n≥2)) or a β-spodumene solid solution (Li₂O·Al₂O₃·nSiO₂ (provided that n≥4)), precipitated therein as a main crystal.

The Li₂O-Al₂O₃-SiO₂-based crystallized glass has a low thermal expansion coefficient and a high mechanical strength, and hence has excellent thermal characteristics. Such crystallized glass can be usually manufactured by forming a Li₂O-Al₂O₃-SiO₂-based crystallizable glass which comprises nucleating components such as TiO₂ and ZrO₂ into a desired shape by a press method or a rollout method, applying heat treatment thereto at a temperature of about 600 to 800°C to form crystal nuclei, and subsequently applying heat treatment to the resultant glass at a temperature of about 800 to 1000°C to cause β-quartz solid solution crystals to precipitate.

For example, a sheet-like crystallized glass can be manufactured by: forming molten glass into a sheet-like shape by a rollout method which involves interposing the molten glass between a pair of forming rolls and subjecting the molten glass to roll forming while quenching it; and then applying heat treatment to the sheet-like glass to cause crystallization. However, manufacturing a sheet-like crystallized glass by the rollout method involves: the problem in that, with the deterioration of the surfaces of the rolls, irregularities of the surfaces of the rolls are transcribed to glass surfaces, resulting in difficulty in providing a highly smooth glass; and the problem in that a glass having a lager size in the width direction cannot be formed due to limitation of the size of the forming rolls. Further, the method also involves the problem in that molten glass needs to be quenched between the forming rolls, and hence the production speed cannot be increased.

In order to solve such problems, Patent Literatures 3 and 4 propose a float method, wherein a molten glass is floated on a molten metal tin bath (float bath) to form the molten glass into a sheet-like glass, and then the sheet-like glass is applied heat treatment to cause crystallization, thereby providing a sheet-like crystallized glass.

### Citation List

Patent Literature 1: JP 11-228180 A
Patent Literature 2: JP 11-228181 A
Patent Literature 3: JP 2001-354429 A
Patent Literature 4: JP 2001-354446 A
Patent Literature 5: JP 2010-1206 A
Patent Literature 6: US 4093468

### Summary of Invention

### Technical Problem

In the case of a float method, molten glass is formed into a sheet-like glass on a high-temperature float bath over as long a time as about 10 to 30 minutes. Thus, the molten glass is cooled much more gradually in the float method than in a rollout method in which the molten glass is cooled to be formed for as short a time as a few seconds to several tens of seconds. Therefore, as disclosed in, for example, Patent Literature 4, devitrification is liable to occur even in a glass designed in consideration of forming molten glass into a sheet-like glass by the float method. As a result, a crystallizable glass provided through a forming step and an annealing step may break owing to the difference in thermal expansion coefficient between a devitrified part and glass. Further, even if a crystallizable glass is provided without any break, a break is liable to occur in a heat treatment step (crystallization step) necessary for crystallizing glass.

Then, Patent Literature 5 proposes a crystallizable glass which resists devitrification even if formed by the float method and does not break in the forming step through the crystallization step, and in which Li₂O-Al₂O₃-SiO₂-based crystals can be precipitated as a main crystal by heat treatment of the glass after forming, and also proposes a crystallized glass formed by crystallizing the crystallizable glass. However, the crystallizable glass disclosed in Patent Literature 5 has the problem in that the crystallizable glass is liable to be cloudy in the crystallization step, thus being unlikely to provide a highly transparent crystallized glass, although the crystallizable glass resists devitrification and is suitable for float forming.

In view of the foregoing, the present invention intends to provide a Li₂O-Al₂O₃-SiO₂-based crystallizable glass which is hard to become cloudy and therefore is highly transparent even when being manufactured by, for example, float forming, and to provide a Li₂O-Al₂O₃-SiO₂-based crystallized glass formed by crystallizing the Li₂O-Al₂O₃-SiO₂-based crystallizable glass.

### Solution to Problem

The inventors of the present invention have made various studies and experiments and have consequently found that the above-mentioned problems can be solved by a Li₂O-Al₂O₃-SiO₂-based crystallizable glass having a particular glass composition, and thus propose the present invention.

That is, the present invention relates to a Li₂O-Al₂O₃-SiO₂-based crystallizable glass characterized by comprising, as a glass composition in terms of mass%, 55 to 75% of SiO₂, 19 to 24% of Al₂O₃, 3 to 4% of Li₂O, 1.5 to 2.8% of TiO₂, 3.8 to 4.8% of TiO₂+ZrO₂, and 0.1 to 0.5% of SnO₂, and satisfying a relationship of 4≤Li₂O+O.741MgO+0.367ZnO≤4.5.

When a Li₂O-Al₂O₃-SiO₂-based crystallizable glass satisfies the composition range described above, such the glass can exert the effects of being hard to devitrify during float forming and being hard to become cloudy in the crystallization step. The mechanism thereof is described below.

The inventors of the present invention have first examined what kinds of crystals precipitate in devitrification part occurred in a Li₂O-Al₂O₃-SiO₂-based crystallizable glass during float forming, and have found that the precipitated crystals in the devitrification part are mullite, β-spodumene, and ZrO₂.

Then the inventors have found that the precipitation of mullite can be suppressed by restricting the content of Al₂O₃ to 24% or less. Further, when the content of Al₂O₃ is too large, other kinds of crystal in addition to mullite tend to precipitate, thereby being liable to cause cloud, and hence the content of Al₂O₃ should be restricted to 24% or less from the viewpoint of providing a highly transparent material as well. Note that Al₂O₃ has the effect of muting the coloring caused by Fe which is mixed as an impurity in glass. Thus, when the content of Al₂O₃ is too small, the coloring caused by Fe becomes heightened, resulting in reducing the transparency of the glass, and hence the content of Al₂O₃ needs to be 19% or more in order to provide a highly transparent material.

Also the inventors have found that the precipitation of β-spodumene can be suppressed by reducing the contents of Li₂O, MgO, and ZnO and is most susceptible to the content of, in particular, Li₂O among them. It is therefore required to restrict the value of Li₂O+0.741MgO+0.367ZnO to 4.5 or less and the content of Li₂O to 4% or less. Note that the coefficients of MgO and ZnO are added for calculating the content of each component in terms of Li₂O mole.

Further, when the contents of Li₂O, MgO, and ZnO are too large, the coloring caused by Fe which is mixed as an impurity becomes heightened, resulting in reducing the transparency of the glass. Li₂O, MgO, and ZnO, together with Al₂O₃, precipitate as a main crystal. Therefore, as the contents of Li₂O, MgO, and ZnO are larger, the content of Al₂O₃ is liable to be smaller in the glass phase of the coloring phase caused by Fe, probably leading to heightening of such the coloring. Thus, the value of Li₂O+0.741MgO+0.367ZnO is preferably restricted to the above-mentioned range from the viewpoint of providing a highly transparent material as well.

Next, the inventors have found that the precipitation of ZrO₂ crystals occurs in synchronization with the precipitation of β-spodumene. To be specific, the inventors have found that ZrO₂ crystals are liable to precipitate when the temperature of molten glass lowers and then rises again in a forming step. Detailed examinations of this phenomenon have revealed that β-spodumene precipitates in a portion in which the temperature of the molten glass partially lowers, thereby causing reductions in the concentrations of Li₂O, MgO, ZnO, Al₂O₃, and SiO₂ in the glass composition of the surrounding portions of the β-spodumene crystals, relatively increasing in the concentration of ZrO₂, and resulting in the precipitation of the ZrO₂ crystals. When the temperature of the molten glass is increased by reheating, the β-spodumene crystals easily dissolve, but the ZrO₂ crystals are relatively hard to dissolve, resulting in the remaining of only the ZrO₂ crystals.

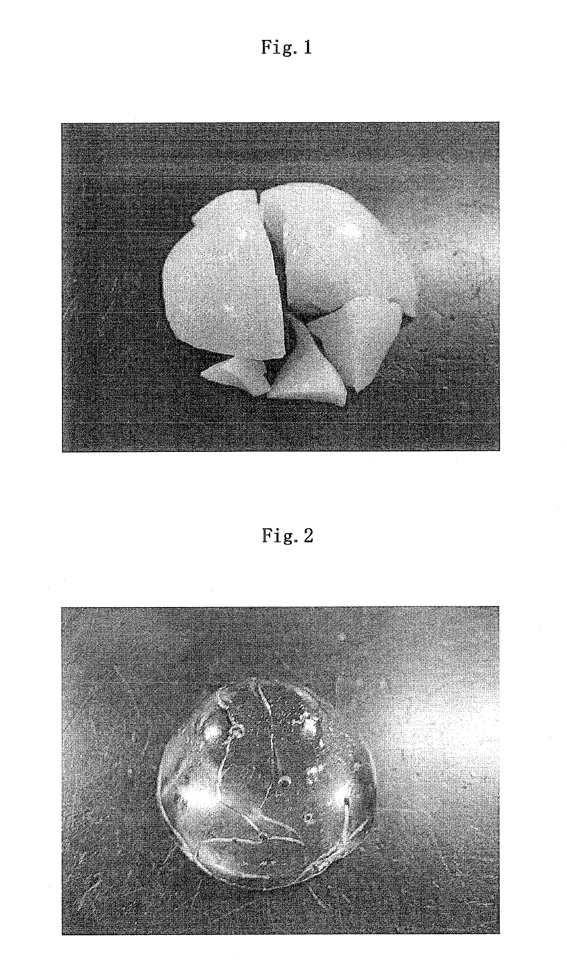

FIG. 1 is a photograph of an outer appearance of a sample obtained by cooling Li₂O-Al₂O₃-SiO₂-based molten glass to 1150°C, leaving it standing still for 10 hours to cause β-spodumene crystals to precipitate, then reheating it to 1340°C, and leaving it standing still for 1 hour. FIG. 2 shows a photograph of an outer appearance of a sample obtained by leaving Li₂O-Al₂O₃-SiO₂-based molten glass standing still at 1340°C. It is found that the sample obtained by first precipitating β-spodumene crystals and then increasing temperature is devitrified in stark white due to the precipitation of ZrO₂ crystals. The finding confirms that the above-mentioned precipitation mechanism of ZrO₂ crystals is correct. Thus, the value of Li₂O+0.741MgO+0.367ZnO needs to be restricted to the above-mentioned range in order to render the precipitation of ZrO₂ crystals to be hard to occur as well.

As described previously, as the contents of Li₂O, MgO, and ZnO are smaller, the glass increasingly resists devitrification and is advantageous for forming. However, when the contents thereof are too small, the glass is conversely liable to be cloudy in the crystallization step, and hence a highly transparent crystallized glass is difficult to be provided. Thus, the value of Li₂O+0.741MgO+0.367ZnO needs to be restricted to 4 or more, and, in particular, the content of Li₂O needs to be restricted to 3% or more.

In order to suppress the cloudiness of glass, the contents of TiO₂ and ZrO₂ are also necessary to be adjusted in addition to the above. TiO₂ and ZrO₂ are components for forming a crystal nucleus and have the function of preventing a crystal particle from coarsening, thereby suppressing the cloudiness of glass. In order to obtain a highly transparent material by suppressing the cloudiness, the total content of TiO₂ and ZrO₂ needs to be 3.8% or more. However, when the content of each of TiO₂ and ZrO₂ is too large, other problems may arise. That is, an excessive content of TiO₂ may cause coloring of glass to reduce transparency thereof, and accelerate the precipitation of β-spodumene. Also, when the content of ZrO₂ is too large, ZrO₂ crystals are liable to precipitate. Thus, when the content of TiO₂ is restricted to 1.5 to 2.8% and the content of TiO₂+ZrO₂ is restricted to 4.8% or less, the occurrence of these problems can be prevented.

The Li₂O-Al₂O₃-SiO₂-based crystallizable glass of the present invention is preferable to be manufactured by float forming.

The Li₂O-Al₂O₃-SiO₂-based crystallizable glass of the present invention is preferable to further comprise 0.05 to 1.5% of B₂O₃.

By the above-mentioned structure, the precipitation of β-spodumene can be suppressed in the crystallization step.

The Li₂O-Al₂O₃-SiO₂-based crystallizable glass of the present invention is preferable to comprise 0.1% or more of MgO.

MgO is a component that is dissolved as a solid solution in a Li₂O-Al₂O₃-SiO₂-based crystal and has the effect of increasing the thermal expansion coefficient of the Li₂O-Al₂O₃-SiO₂-based crystal. The addition of MgO enables the achievement of a desired near zero thermal expansion coefficient.

The Li₂O-Al₂O₃-SiO₂-based crystallizable glass of the present invention is preferable to further comprise 0.2% or less of Nd₂O₃.

For example, Patent Literature 6 proposes that Nd₂O₃ should be added as a complementary coloring agent in order to cope with a coloring problem. However, this method is, so to speak, a technology involving converting yellow coloring to an achromatic color by superimposing blue coloring caused by Nd₂O₃ over the yellow coloring, resulting in the occurrence of the problem in that the transmittance in a visible region deteriorates, the outer appearance of the resultant glass looks dark, and hence the transparency thereof is liable to be impaired. Thus, the content of Nd₂O₃ needs to be restricted to 0.2% or less, thereby being able to provide a glass excellent in transparency.

The Li₂O-Al₂O₃-SiO₂-based crystallizable glass of the present invention is preferable to further comprise 60 to 300 ppm of Fe₂O₃.

By the above-mentioned structure, a Li₂O-Al₂O₃-SiO₂-based crystallizable glass having less coloring and being excellent in transparency can be provided.

The present invention also relates to a Li₂O-Al₂O₃-SiO₂-based crystallized glass, which is obtained by crystallizing any one of the above-mentioned Li₂O-Al₂O₃-SiO₂-based crystallizable glasses.

The Li₂O-Al₂O₃-SiO₂-based crystallized glass of the present invention is preferable to have, at a thickness of 3 mm, a b* value of 4.5 or less in terms of L*a*b* representation based on a CIE standard.

The Li₂O-Al₂O₃-SiO₂-based crystallized glass of the present invention is preferable to have, at a thickness of 1.1 mm, a transmittance of 82.5% or more at a wavelength of 400 nm.

The Li₂O-Al₂O₃-SiO₂-based crystallized glass of the present invention is preferable to have a thermal expansion coefficient of -2.5×10⁻⁷/°C to 2.5×10⁻⁷/°C at 30 to 380°C.

The present invention also relates to a production method for any one of the above-mentioned Li₂O-Al₂O₃-SiO₂-based crystallizable glasses, comprising the steps of: (1) melting raw powder materials to provide molten glass; (2) fining the molten glass; (3) transporting the molten glass being fined to a forming section through a feeder; and (4) forming the molten glass in the forming section, wherein the molten glass is kept at a temperature equal to or more than a liquidus temperature of β-spodumene in the step (2) or (3).

It is possible to prevent, by the production method, the precipitation of undesirable ZrO₂ crystals that cause devitrification in a fining chamber or a feeder.

### Brief Description of Drawings

FIG. 1 is a photograph of an outer appearance of a sample obtained by cooling Li₂O-Al₂O₃-SiO₂-based molten glass to 1150°C, leaving it standing still for 10 hours to cause β-spodumene crystals to precipitate, then reheating it to 1340°C, and leaving it standing still for 1 hour.
FIG. 2 is a photograph of an outer appearance of a sample obtained by leaving Li₂O-Al₂O₃-SiO₂-based molten glass standing still at 1340°C.

### Description of Embodiments

A Li₂O-Al₂O₃-SiO₂-based crystallizable glass of the present invention is characterized by comprising, as a glass composition in terms of mass%, 55 to 75% of SiO₂, 19 to 24% of Al₂O₃, 3 to 4% of Li₂O, 1.5 to 2.8% of TiO₂, 3.8 to 4.8% of TiO₂+ZrO₂, and 0.1 to 0.5% of SnO₂, and satisfying a relationship of 4≤Li₂O+0.741MgO+0.367ZnO≤4.5.

The reasons why the glass composition is restricted as above are described below. Note that in the following description of the content of each component, "%" refers to "mass%," unless otherwise specified.

SiO₂ is a component that forms a network of the glass and constitutes a Li₂O-Al₂O₃-SiO₂-based crystal. The content of SiO₂ is preferably 55 to 75%, more preferably 58 to 70%, particularly preferably 60 to 68%. When the content of SiO₂ is less than 55%, the thermal expansion coefficient of the glass tends to increase, with the result that a crystallized glass excellent in thermal shock resistance becomes hard to be provided, and moreover, the chemical durability of the glass tends to deteriorate. On the other hand, when the content of SiO₂ is more than 75%, the meltability of the glass deteriorates, the viscosity of the molten glass becomes larger, and hence the glass cannot be easily fined and forming of the glass tends to be difficult.

Al₂O₃ is a component that forms a network of the glass and constitutes a Li₂O-Al₂O₃-SiO₂-based crystal. Further, Al₂O₃ is present in a residual glass phase in a crystallized glass to reduce the degree of coloring caused by TiO₂ and Fe₂O₃ and enhanced by SnO₂. The content of Al₂O₃ is preferably 19 to 24%, particularly preferably 20 to 23.5%. When the content of Al₂O₃ is less than 19%, the thermal expansion coefficient of glass tends to increase, with the result that a crystallized glass excellent in thermal shock resistance is not easily provided, and moreover, the chemical durability of the glass tends to deteriorate. In addition, the effect of reducing the degree of coloring caused by TiO₂ and Fe₂O₃ and enhanced by SnO₂ cannot be easily obtained. On the other hand, when the content of Al₂O₃ is more than 24%, the meltability of the glass deteriorates, the viscosity of the molten glass becomes larger, and hence the glass cannot be easily fined and forming of the glass tends to be difficult. In addition, mullite crystals tend to precipitate to devitrify the glass and the glass is liable to break. Further, the glass is liable to be cloudy.

Li₂O is a component that constitutes a Li₂O-Al₂O₃-SiO₂-based crystal, and is a component that gives a significant influence to the crystallinity and lowers the viscosity of the glass, thereby improving the meltability and formability of the glass. The content of Li₂O is preferably 3 to 4%, particularly preferably 3.1 to 3.9%. When the content of Li₂O is less than 3%, the glass is liable to be cloudy in a crystallization step with the result that a highly transparent crystallized glass is difficult to be provided. On the other hand, when the content of Li₂O is more than 4%, the glass is liable to devitrify due to β-spodumene crystals.

TiO₂ is a component that serves as a nucleating agent for causing crystals to precipitate in the crystallization step. The content of TiO₂ is preferably 1.5 to 2.8%, more preferably 1.6 to 2.6%, particularly preferably 1.7 to 2.4%. When the content of TiO₂ is less than 1.5%, crystal nuclei are not formed sufficiently and coarse crystals precipitate, with the result that the resultant crystallized glass may become cloudy or may break. When the content of TiO₂ is more than 2.8%, coloring of the glass tends to be enhanced. In addition, the glass tends to devitrify and is liable to break because TiO₂ has the function of accelerating the precipitation of β-spodumene crystals.

ZrO₂ is a nucleating component for causing crystals to precipitate in the crystallization step as TiO₂ is. The content of ZrO₂ is preferably 0 to 4%, more preferably 1 to 3.5%, particularly preferably 1.5 to 3%. When the content of ZrO₂ is more than 4%, the glass tends to devitrify during melting, and hence forming of the glass becomes difficult.

In the Li₂O-Al₂O₃-SiO₂-based crystallizable glass of the present invention, the content of TiO₂+ZrO₂ is preferably 3.8 to 4.8%, more preferably 3.9 to 4.7%, particularly preferably 4 to 4.6%. When the content of TiO₂+ZrO₂ is less than 3.8%, the amount of crystal nuclei in the glass becomes insufficient, causing coarse crystals to precipitate, with the result that the resultant crystallized glass is liable to be cloudy. On the other hand, when the content of TiO₂+ZrO₂ is more than 4.8%, the glass is liable to be colored or devitrified.

In the Li₂O-Al₂O₃-SiO₂-based crystallizable glass of the present invention, the value of Li₂O+0.741MgO+0.367ZnO satisfies the ranges of preferably 4 to 4.5 and particularly preferably 4.1 to 4.4. When the value of Li₂O+0.741MgO+0.367ZnO is less than 4, the glass is liable to be cloudy in the crystallization step, with the result that a highly transparent crystallized glass is difficult to be provided. On the other hand, when the value of Li₂O+0.741MgO+0.367ZnO is more than 4.5, devitrification due to β-spodumene crystals and ZrO₂ crystals is liable to occur, and the content of Al₂O₃ in the glass phase in the crystallized glass decreases, with the result that the suppressing effect of Al₂O₃ on coloring is difficult to be obtained.

Note that the content of each of the MgO and ZnO components is not particularly limited as long as the above-mentioned range is satisfied, but the content is preferably restricted to, for example, the following range.

MgO is a component that is dissolved as a solid solution in a Li₂O-Al₂O₃-SiO₂-based crystal and has the effect of increasing the thermal expansion coefficient of the Li₂O-Al₂O₃-SiO₂-based crystal. Within the composition range according to the present invention, the thermal expansion coefficient of the glass is liable to be a larger minus value. However, adding MgO leads to a desired near zero thermal expansion coefficient of the glass. The content of MgO is preferably 0 to 1.5%, particularly preferably 0.1 to 1.2%. When the content of MgO is more than 1.5%, the crystallinity becomes too strong, with the result that the glass tends to devitrify and is liable to break.

ZnO is a component that is dissolved as a solid solution in a Li₂O-Al₂O₃-SiO₂-based crystal as MgO is. The content of ZnO is preferably 0 to 2%, more preferably 0 to 1.5%, particularly preferably 0.1 to 1.2%. When the content of ZnO is more than 2%, the crystallinity becomes too strong, and hence, when the glass is formed while being cooled gradually, the glass tends to devitrify. As a result, the glass is liable to break, and hence it tends to be difficult to form the glass by a float method.

The Li₂O-Al₂O₃-SiO₂-based crystallizable glass has a high viscosity, so that it becomes difficult to make bubbles in the molten glassrisetodisappear during manufacturing process. Thus, a fining agent must be needed essentially. Examples of the fining agent include, in general, As₂O₃, Sb₂O₃, SnO₂, SO₃, and halogens.

Among them, substantial addition of As₂O₃ and Sb₂O₃ are preferable to be avoided, since As₂O₃ and Sb₂O₃ are reduced into a colloid during float forming, so that the transparency of the glass is impaired. To be specific, the content of each of As₂O₃ and Sb₂O₃ is preferable to restrict to less than 0.1%.

Cl evaporates and bonds with water in the air, yielding HCl, which erodes the metal parts of forming facilities, and hence the addition of Cl is preferable to be avoided. Further, as for SO₃, the amount of SO₃ that can dissolve in a crystallized glass of this kind is very small, and hence the function of SO₃ as a fining agent cannot be expected.

SnO₂ therefore is the most suitable as a fining agent for manufacturing the Li₂O-Al₂O₃-SiO₂-based crystallizable glass. The content of SnO₂ is preferably 0.1 to 0.5%, more preferably 0.1 to 0.4%, particularly preferably 0.1 to 0.3%. When the content of SnO₂ is less than 0.1%, the effect of SnO₂ as a fining agent is difficult to be obtained. On the other hand, when the content of SnO₂ is more than 0.5%, coloring caused by TiO₂ and Fe₂O₃ prevails, and hence the crystallized glass is liable to be tinged with yellow. Further, SnO₂ has the function of raising the devitrification speed of β-spodumene, though details about the mechanism thereof are unknown. Accordingly, too large an addition amount of SnO₂ is liable to cause devitrification.

It is preferable to restrict the content of Nd₂O₃, which serves as a colorant, because Nd₂O₃ reduces the transparency of the glass. To be specific, the content of Nd₂O₃ is preferably 0.2% or less, more preferably 0.1% or less, particularly preferably substantially free of Nd₂O₃ (specifically 100 ppm or less). As a result, a Li₂O-Al₂O₃-SiO₂-based crystallized glass having high transparency and a constant color tone can be provided. Further, Nd₂O₃ is a rare earth oxide, which leads to increase of material cost. Avoiding substantial use of Nd₂O₃, an inexpensive Li₂O-Al₂O₃-SiO₂-based crystallized glass can be easily provided. Note that, when priority is put on less coloring rather than higher transparency, Nd₂O₃ may be added at, for example, about 500 ppm.

It is preferable to restrict the content of Fe₂O₃ which is mixed as an impurity component. The content of Fe₂O₃ is preferably 300 ppm or less, more preferably 250 ppm or less, particularly preferably 200 ppm or less. The content of Fe₂O₃ is preferably as small as possible because the degree of coloring lowers. However, in order to control the content of Fe₂O₃ within the range of, for example, less than 60 ppm, it is necessary to use a high-purity raw material or the like, with the result that an inexpensive Li₂O-Al₂O₃-SiO₂-based crystallized glass cannot be provided.

In the Li₂O-Al₂O₃-SiO₂-based crystallizable glass of the present invention, the following various components may be added in addition to the above-mentioned components.

B₂O₃ has the effect of suppressing the precipitation of β-spodumene. In addition, B₂O₃ also has the effect of accelerating the dissolution of a SiO₂ raw material in a glass melting step. The content of B₂O₃ is preferably 0.05 to 1.5%, particularly preferably 0.1 to 1%. When the content of B₂O₃ is less than 0.05%, the effects are difficult to be obtained. On the other hand, when the content of B₂O₃ is more than 1.5%, the glass is liable to be cloudy and therefore a highly transparent glass is difficult to be provided. Further, B₂O₃ is concentrated in the residual glass phase by crystallization, resulting in the reduction of the viscosity of the residual glass phase. Thus, when the resultant crystallized glass is used under high temperature, the crystallized glass is liable to be softened and deformed.

P₂O₅ is a component that accelerates the phase separation of glass and assists the formation of crystal nucleus. The content of P₂O₅ is preferably 0 to 3%, more preferably 0.1 to 3%, particularly preferably 1 to 2%. When the content of P₂O₅ is more than 3%, the glass is liable to undergo phase separation in a melting step, with the result that a glass having a predetermined composition is difficult to be provided and the glass tends to be opaque.

Further, it is possible to add Na₂O, K₂O, CaO, SrO, and BaO at a total content of preferably 0 to 2%, particularly preferably 0.1 to 2%, in order to reduce the viscosity of the glass and improve the meltability and formability thereof. When the total content of these components is more than 2%, the glass is liable to devitrify.

The Li₂O-Al₂O₃-SiO₂-based crystallizable glass of the present invention can be manufactured by a method comprising the steps of: (1) melting raw powder materials to provide molten glass; (2) fining the molten glass; (3) transporting the molten glass being fined to a forming section through a feeder; and (4) forming the molten glass in the forming section. Here, the molten glass is preferably kept at a temperature equal to or more than the liquidus temperature of β-spodumene in the step (2) or (3) by the following reason.

As described previously, when β-spodumene crystals precipitate and then ZrO₂ crystals successively precipitate, even when the temperature of the molten glass rises afterward, the ZrO₂ crystals are difficult to dissolve again. Thus, it is necessary to prevent the temperature of part or the entire part of the molten glass from lowering to a temperature lower than the liquidus temperature of β-spodumene, particularly in the fining chamber near the forming section, and in the feeder between the fining chamber and the forming section. When the temperature of the molten glass lowers and once ZrO₂ crystals precipitate, even if the molten glass is reheated, the ZrO₂ crystals remain in the molten glass and flow out to the forming section as it is.

In order to prevent such the phenomenon, it is preferred to heat the molten glass from the above with a burner or the like in the fining chamber and the feeder to the forming section, so that the temperature of the molten glass rises to a temperature higher, by 50°C or more, than the liquidus temperature of β-spodumene, preferably to a temperature higher by 100°C or more. Besides, in the feeder section whose temperature is particularly liable to lower, it is preferred to apply such means as heating the molten glass by electrodes made of Pt or the like and inserted in the molten glass, or forming the internal walls of the feeder with a precious metal such as Pt and applying an electric current to the internal walls to heat the molten glass.

Examples of raw powder materials for Li₂O, Al₂O₃, and SiO₂, which are main components, include lithium carbonate, silica sand,silicastone,aluminumoxide,and aluminum hydroxide. Further, spodumene can be given as an inexpensive raw material for Li₂O, but spodumene generally includes Fe₂O₃ in a large amount in many cases, and hence the usage of spodumene needs to be restricted. As for raw materials for ZrO₂, in which Fe₂O₃ is liable to be mixed, it is preferred to use zirconium silicate in which the content of Fe₂O₃ is 0.5% or less or high-purity ZrO₂.

The Li₂O-Al₂O₃-SiO₂-based crystallized glass of the present invention can be produced by crystallizing the Li₂O-Al₂O₃-SiO₂-based crystallizable glass as mentioned-above.

There is given, as a crystallization method, a method involving applying heat treatment to a formed Li₂O-Al₂O₃-SiO₂-based crystallizable glass, for example, at 600 to 800°C for 1 to 5 hours, thereby causing crystal nuclei to form, and then further applying heat treatment to the resultant glass at 800 to 950°C for 0.5 to 3 hours, thereby causing Li₂O-Al₂O₃-SiO₂-based crystals to precipitate as a main crystal.

It is preferred that the Li₂O-Al₂O₃-SiO₂-based crystallized glass of the present invention, at a thickness of 3 mm, has a b* value of 4.5 or less, particularly preferably 4 or less, in terms of L*a*b* representation based on the CIE standard. Also, it is preferred that the Li₂O-Al₂O₃-SiO₂-based crystallized glass of the present invention, at a thickness of 1.1 mm, has a transmittance of 82.5% or more, particularly preferably 83% or more, at a wavelength of 400 nm.

The Li₂O-Al₂O₃-SiO₂-based crystallized glass of the present invention is used for heat resistant applications, and hence preferably has a thermal expansion coefficient as close to zero as possible. Specifically, the thermal expansion coefficient is preferably -2.5×10⁻⁷/°C to 2.5×10⁻⁷/°C, particularly preferably -1.5×10⁻⁷/°C to 1.5×10⁻⁷/°C in the temperature range of 30 to 380°C. When the thermal expansion coefficient is out of the above-mentioned range, the risk of break of the crystallized glass is liable to increase.

The Li₂O-Al₂O₃-SiO₂-based crystallized glass of the present invention may be subjected to post-processing such as cutting, polishing or bending processing, or to painting and the like on the surface.

### Examples

Hereinafter, the Li₂O-Al₂O₃-SiO₂-based crystallizable glass and Li₂O-Al₂O₃-SiO₂-based crystallized glass of the present invention are described by way of examples.

Tables 1 and 2 show Examples 1 to 3 according to the present invention and Comparative Examples 1 to 8.

**[Table 1]**

| | | Example | | | Comparative Example | | | |
|---|---|---|---|---|---|---|---|---|
| | | 1 | 2 | 3 | 1 | 2 | 3 | 4 |
| Glass composition (mass%) | SᵢO₂ | 65.7 | 65.1 | 65.5 | 63.8 | 67.2 | 65.7 | 65.8 |
| | Al₂O₃ | 22.2 | 21.9 | 21.8 | 24.8 | 18.5 | 22.2 | 22.1 |
| | Li₂O | 3.7 | 3.8 | 3.6 | 3.9 | 3.8 | 4.4 | 2.9 |
| | Na₂O | 0.4 | 0.4 | 0.4 | 0.2 | 0.4 | 0.4 | 0.4 |
| | K₂0 | 0.3 | 0.3 | 0.3 | 0.3 | 0.3 | 0.3 | 0.3 |
| | MgO | 0.7 | 0.6 | 0.7 | 0.5 | 0.8 | | 10 |
| | BaO | 1.2 | 1.2 | 1.2 | 0.7 | 2.1 | 1.2 | 1.2 |
| | ZnO | | 0.4 | 0.7 | | | | 0.5 |
| | TiO₂ | 2.0 | 2.0 | 2.0 | 2.0 | 2.0 | 2.0 | 2.0 |
| | ZrO₂ | 2.2 | 2.2 | 2.2 | 2.2 | 2.2 | 2.2 | 2.2 |
| | P₂O₅ | 1.4 | 1.4 | 1.4 | 1.4 | 2.5 | 1.4 | 1.4 |
| | B₂O₃ | | 0.3 | 0.05 | | | | |
| | SnO₂ | 0.2 | 0.4 | 0.2 | 0.2 | 0.2 | 0.2 | 0.2 |
| | Li+0.741Mg+0.367Zn | 4.2 | 4.4 | 4.4 | 4.3 | 4.4 | 4.4 | 3.8 |
| | Ti+Zr | 4.2 | 4.2 | 4.2 | 4.2 | 4.2 | 4.2 | 4.2 |
| b* value | | 3.4 | 4.3 | 3.8 | 4.4 | 5.2 | 3.6 | Cloudy |
| Transmittance at 400 nm (%) | | 85.1 | 83 | 84.2 | 82.8 | 79.5 | 84.8 | Cloudy |
| Devitrification property under temperature drop | | ○ | ○ | ○ | × | ○ | × | ○ |

**[Table 2]**

| | | Comparative Example | | | |
|---|---|---|---|---|---|
| | | 5 | 6 | 7 | 8 |
| Glass composition (mass%) | SᵢO₂ | 65.4 | 66.4 | 65.3 | 66.1 |
| | Al₂O₃ | 22.0 | 22.3 | 22.0 | 22.2 |
| | Li₂O | 3.6 | 3.6 | 4.2 | 3.4 |
| | Na₂O | 0.4 | 0.4 | 0.4 | 0.4 |
| | K₂O | 0.3 | 0.3 | 0.3 | 0.3 |
| | MgO | 0.7 | 0.7 | 0.8 | 0.6 |
| | BaO | 1.0 | 1.2 | 1.2 | 1.2 |
| | ZnO | | | | |
| | TiO₂ | 2.8 | 1.3 | 2.0 | 2.0 |
| | ZrO₂ | 2.2 | 2.2 | 2.2 | 2.2 |
| | P₂O₅ | 1.4 | 1.4 | 1.4 | 1.4 |
| | B₂O₃ | | | | |
| | SnO₂ | 0.2 | 0.2 | 0.2 | 0.2 |
| | Li+0.741Mg+0.367Zn | 4.1 | 4.1 | 4.8 | 3.8 |
| | Ti+Zr | 5.0 | 3.5 | 4.2 | 4.2 |
| b* value | | 4.8 | Cloudy | 4.9 | Cloudy |
| Transmittance at 400 nm (%) | | 81.5 | Cloudy | 80.7 | Cloudy |
| Devitrification property under temperature drop | | × | ○ | × | ○ |

Each sample was prepared as described below. First, raw materials in the forms of an oxide, a hydroxide, a carbonate, a nitrate, and the like were blended and uniformly mixed so that a glass having each of the compositions shown in the tables was obtained. Then, the raw materials were loaded into a platinum crucible and melted at 1600°C for 20 hours. Subsequently, the molten glass was poured on a carbon surface plate and was formed into a glass sheet with a thickness of 5 mm by using rollers, and the glass sheet was then cooled at a temperature drop rate of 100°C/h from 700°C to room temperature in an annealing furnace. Thus, each sample of Li₂O-Al₂O₃-SiO₂-based crystallizable glass was prepared.

Each sample of Li₂O-Al₂O₃-SiO₂-based crystallizable glass thus obtained was crystallized under the schedule of a nucleation step at 780°C for 1 hour through a crystal growth step at 890°C for 0.5 hour, thereby obtaining each Li₂O-Al₂O₃-SiO₂-based crystallized glass. Note that the temperature rise rate from room temperature to a nucleation temperature was set to 400°C/h, the temperature rise rate from the nucleation temperature to a crystal growth temperature was set to 300°C/h, and the temperature drop rate from the crystal growth temperature to room temperature was set to 500°C/h.

Each of the resulting Li₂O-Al₂O₃-SiO₂-based crystallized glasses was evaluated for its transparency. In order to make evaluation on the transparency, a Li₂O-Al₂O₃-SiO₂-based crystallized glass sample was ground into a glass sheet with a thickness of 3 mm, the surfaces of the glass sheet were optically polished, and the polished glass sheet was then subjected to measurement with a spectrophotometer to determine a b* value. Further, the glass sheet with a thickness of 3 mm was further ground into a glass sheet with a thickness of 1.1 mm, the surfaces of the glass sheet were optically polished, and the polished glass sheet was then subjected to measurement of a transmittance at a wavelength of 400 nm with a spectrophotometer. Note that, when a sample was clearly cloudy and had no transparency on the basis of appearance observation, such the sample was not subject to measurement and represented by "cloudy."

Devitrification property under temperature drop was evaluated in such the manner that the Li₂O-Al₂O₃-SiO₂-based crystallizable glass was remelted at 1500°C for 30 minutes, the molten glass was then loaded into a temperature gradient electric furnace, and then, at each temperature, time at which crystals started precipitating to cause devitrification was measured. In consideration of the temperature drop rate in float forming, when it took 3 minutes or longer to cause devitrification, such the sample was represented by "○" as being able to be applied to float forming. When it took less than 3 minutes to cause devitrification, such the sample was represented by "×" as being unable to be applied to float forming because of tendency of devitrification.

As evident from Tables 1 and 2, it was found that each example provided the Li₂O-Al₂O₃-SiO₂-based crystallizable glass that was more resistant to devitrification in comparison to comparative examples and was able to be applied to float forming, and provided the Li₂O-Al₂O₃-SiO₂-based crystallized glass that was less cloudy, less colored, and more highly transparent in comparison to comparative examples.

## Claims

1. A Li₂O-Al₂O₃-SiO₂-based crystallizable glass, comprising, as a glass composition in terms of mass%, 55 to 75% of SiO₂, 19 to 24% of Al₂O₃, 3 to 4% of Li₂O, 1.5 to 2.8% of TiO₂, 3.8 to 4.8% of TiO₂+ZrO₂, and 0.1 to 0.5% of SnO₂, and satisfying a relationship of 4≤Li₂O+0.741MgO+0.367ZnO≤4.5.

2. The Li₂O-Al₂O₃-SiO₂-based crystallizable glass according to claim 1, wherein the Li₂O-Al₂O₃-SiO₂-based crystallizable glass is manufactured by float forming.

3. The Li₂O-Al₂O₃-SiO₂-based crystallizable glass according to claim 1 or 2, further comprising 0.05 to 1.5% of B₂O₃.

4. The Li₂O-Al₂O₃-SiO₂-based crystallizable glass according to any one of claims 1 to 3, comprising 0.1% or more of MgO.

5. The Li₂O-Al₂O₃-SiO₂-based crystallizable glass according to any one of claims 1 to 4, further comprising 0.2% or less of Nd₂O₃.

6. The Li₂O-Al₂O₃-SiO₂-based crystallizable glass according to any one of claims 1 to 5, further comprising 60 to 300 ppm of Fe₂O₃.

7. A Li₂O-Al₂O₃-SiO₂-based crystallized glass, which is obtained by crystallizing the Li₂O-Al₂O₃-SiO₂-based crystallizable glass according to any one of claims 1 to 6.

8. The Li₂O-Al₂O₃-SiO₂-based crystallized glass according to claim 7, wherein the Li₂O-Al₂O₃-SiO₂-based crystallized glass, at a thickness of 3 mm, has a b* value of 4.5 or less in terms of L*a*b* representation based on a CIE standard.

9. The Li₂O-Al₂O₃-SiO₂-based crystallized glass according to claim 7 or 8, wherein the Li₂O-Al₂O₃-SiO₂-based crystallized glass, at a thickness of 1.1 mm, has a transmittance of 82.5% or more at a wavelength of 400 nm.

10. The Li₂O-Al₂O₃-SiO₂-based crystallized glass according to any one of claims 7 to 9, wherein the Li₂O-Al₂O₃-SiO₂-based crystallized glass has a thermal expansion coefficient of -2.5×10⁻⁷/°C to 2.5×10⁻⁷/°C at 30 to 380°C.

11. A production method for the Li₂O-Al₂O₃-SiO₂-based crystallizable glass according to any one of claims 1 to 6, comprising the steps of:
(1) melting raw powder materials to provide molten glass;
(2) fining the molten glass;
(3) transporting the molten glass being fined to a forming section through a feeder; and
(4) forming the molten glass in the forming section,
wherein the molten glass is kept at a temperature equal to or more than a liquidus temperature of β-spodumene in the step (2) or (3).
